## Europäisches Patentamt

## European Patent Office

## Office européen des brevets

(19)

(11) Veröffentlichungsnummer: **0 026 921**
**B1**

(12)

# EUROPÄISCHE PATENTSCHRIFT

(45) Veröffentlichungstag der Patentschrift:
26.05.82

(21) Anmeldenummer: 80105976.7

(22) Anmeldetag: 02.10.80

(51) Int. Cl.³: **C 04 B 7/44**, F 27 B 7/20

(54) Anlage zur Wärmebehandlung von feinkörnigem Gut.

(30) Priorität: 08.10.79 DE 2940676

(43) Veröffentlichungstag der Anmeldung:
15.04.81 Patentblatt 81/15

(45) Bekanntmachung des Hinweises auf die Patenterteilung:
26.05.82 Patentblatt 82/21

(84) Benannte Vertragsstaaten:
BE DE FR GB

(56) Entgegenhaltungen:
ZEMENT-KALK-GIPS, Nr. 5, 1962,
Seite 203 Bauverlag GmbH,
Wiesbaden DE.

(73) Patentinhaber: Krupp Polysius AG,
Graf-Galen-Strasse 17, D-4720 Beckum (DE)

(72) Erfinder: Grudno, Hans-Dieter, Pappelweg 2,
D-4720 Beckum (DE)

(74) Vertreter: Tetzner, Volkmar, Dr.-Ing. Dr. Jur.,
Van-Gogh-Strasse 3, D-8000 München 71 (DE)

Anlage zur Wärmebehandlung von feinkörnigem Gut

Die Erfindung betrifft eine Anlage zur Wärmebehandlung von feinkörnigem Gut, insbesondere zur Herstellung von Zement, enthaltend einen Drehrohrofen, einen Gutvorwärmer, ein in Abgasstromrichtung gesehen nach dem Vorwärmer angeordnetes Ofenabgasgebläse, einen zur Entstaubung der Ofenabgase dienenden Elektrofilter sowie ein By-pass-System mit einer zwischen Drehrohrofen und Vorwärmer angeschlossenen By-pass-Leitung sowie einem zur Entstaubung des By-pass-Stromes dienenden Anlagenteil.

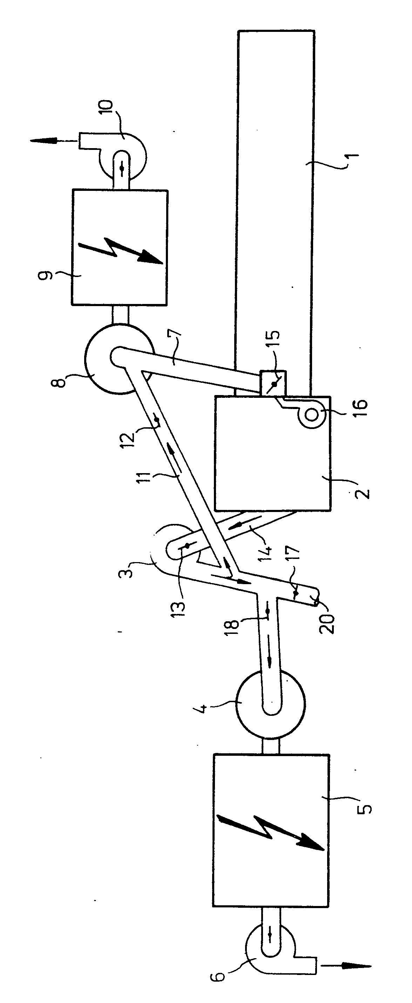

Anlagen dieser Art (vgl. «Zement–Kalk–Gips», 1962, S. 203, Abb. 11) werden eingesetzt, wenn das Rohmaterial einen so hohen Gehalt an Schadstoff-Bestandteilen (wie z.B. Alkalien) aufweist, dass sich durch einen Kreislauf dieser Schadstoffe innerhalb der Anlage eine unzulässig hohe Schadstoff-Konzentration ergeben könnte. Durch Abzweigung eines Teiles der Ofenabgase und gesonderte Entstaubung dieses By-pass-Stromes (wobei der aus dem By-pass-Strom abgeschiedene Staubanteil nicht in das System zurückgeführt wird) lässt sich die Ausbildung eines störenden Schadstoff-Kreislaufes (beispielsweise eines Alkali-Kreislaufes) vermeiden.

Bei den bekannten Anlagen ist im By-pass-System im allgemeinen entweder ein Elektrofilter und ein vorgeschalteter Kühler vorgesehen, odert es ist zur Entstaubung des By-pass-Stromes ein Zyklon angeordnet. Die über das nach dem Gutvorwärmer angeordnete Ofenabgasgebläse geförderten Ofenabgase werden im allgemeinen einer Rohmehl-Mahlanlage zugeführt und anschliessend durch einen Elektrofilter entstaubt. Bei Nichtbetrieb der Mühle können die Ofenabgase nach der erforderlichen Abkühlung auch unmittelbar dem Elektrofilter zugeführt werden.

Das für die Verringerung der Schadstoff-Konzentration erforderliche By-pass-System bedingt einen beträchtlichen anlagentechnischen Aufwand. Dieser Aufwand ist besonders in den Fällen unerwünscht, in denen hohe Schadstoffgehalte im Rohmaterial, die eine Einschaltung des By-pass-Systems erfordern, nur kurzzeitig und jeweils nur in längeren Zeitabständen auftreten.

Der Erfindung liegt daher die Aufgabe zugrunde, eine Anlage der eingangs genannten Art so auszubilden, dass der durch ein erforderliches By-pass-System bedingte wirtschaftliche Aufwand wesentlich verringert ist.

Diese Aufgabe wird erfindungsgemäss dadurch gelöst, dass die Druckseite des Ofenabgasgebläses mit dem By-pass-System über eine mit einem Drosselorgan versehene Verbindungsleitung verbunden ist.

Dadurch wird die Möglichkeit geschaffen, bei Nichtbenötigung des By-pass-Systems (d.h. bei der Verarbeitung von Rohmaterial mit niedrigem Schadstoffgehalt) die wesentlichen Anlagenteile des By-pass-Systemes, insbesondere einen im By-pass-System angeordneten Elektrofilter und vorgeschalteten Kühler oder einen Entstaubungszyklon, mit in den Produktionskreislauf einzubeziehen, indem ein Teil der gesamten Ofenabgase über die genannte Verbindungsleitung den erwähnten Anlagenteilen des By-pass-Systems zugeführt wird. Das vom Ofenabgasgebläse geförderte Ofenabgas wird also in einen zur Rohmehl-Mühle (und dem nachgeschalteten Elektrofilter) geführten Volumenstrom und einen zum By-pass-System geleiteten Volumenstrom aufgeteilt. Da das Ofenabgasgebläse im allgemeinen ohnehin mit einer gewissen Leistungsreserve versehen wird, kann die Anlage in einem solchen Falle mit einer erhöhten Ofenabgasmenge und daher mit gesteigerter Leistung gefahren werden. Auf diese Weise lassen sich wesentliche wirtschaftliche Vorteile vor allem in Fällen erzielen, in denen nur kurzzeitig und in längeren Zeitabständen so hohe Schadstoffgehalte im Rohmaterial auftreten, dass ein Betrieb des By-pass-Systemes erforderlich ist.

Dabei kann es erfindungsgemäss auch zweckmässig sein, das Ofenabgasgebläse von vornherein für eine Abgasmenge auszulegen, die der über den Elektrofilter geführten Abgasmenge zuzüglich der vollen Kapazität des By-pass-Systems entspricht. In einem solchen Falle kann damit die volle Kapazität des By-pass-Systems zur Leistungssteigerung ausgenutzt werden.

Ein Ausführungsbeispiel der Erfindung ist in der Zeichnung veranschaulicht.

Die in Aufsicht schematisch dargestellte Anlage enthält einen Drehrohrofen 1, einen Gutvorwärmer 2, ein Ofenabgasgebläse 3, einen ersten Verdampfungskühler 4, einen ersten Elektrofilter 5 und ein erstes Filtergebläse 6. Die genannten Anlagenteile liegen im Strömungsweg der Ofenabgase, wobei die Ofenabgase entweder über eine Abgasleitung 20 zunächst einer (in der Zeichnung nicht dargestellten) Rohmehl-Mühle oder direkt dem Elektrofilter 5 zugeführt werden können.

Die Anlage enthält weiterhin ein By-pass-System mit einer zwischen Drehrohrofen 1 und Vorwärmer 2 angeschlossenen By-pass-Leitung 7, einem zweiten Verdampfungskühler 8, einem zweiten Elektrofilter 9 sowie einem zweiten Filtergebläse 10.

Die Druckseite des Ofenabgasgebläses 3 ist über eine Verbindungsleitung 11 mit dem By-pass-System verbunden, und zwar ist diese Verbindungsleitung 11 an die By-pass-Leitung 7 nahe ihrem Anschluss an den Verdampfungskühler 8 angeschlossen.

In der Verbindungsleitung 11 ist ein Drosselorgan 12 vorgesehen. Ein weiteres Drosselorgan 13 ist in der vom Vorwärmer 2 zum Ofenabgasgebläse 3 führenden Leitung 14 vorgesehen. In der By-pass-Leitung 7 ist ein Schieber 15 angeordnet. Ein Kühlluftventilator 16 dient zur Zuführung von Frischluft, durch die die am Ofeneinlauf abgesaugten heissen Ofenabgase des By-pass-Stromes auf eine geeignete Temperatur abgekühlt werden. Drosselorgane 17 und 18 dienen schliesslich zur Einstellung der der Rohmehl-Mühle bzw. direkt dem Elektrofilter 5 zugeführten Ofenabgasmenge.

Die Wirkungsweise der Anlage in den beiden in Betracht kommenden Fällen ist wie folgt:

Findet ein Rohmaterial mit hohem Schadstoffgehalt Verwendung, so dass zur Verringerung der Schadstoffkonzentration ein Teil der Ofenabgase über das By-pass-System abgezogen werden muss, so ist der Schieber 15 geöffnet und das Drosselorgan 12 in der Verbindungsleitung 11 geschlossen. Es wird infolgedessen ein bestimmter, durch die Auslegung der Anlage und die Einstellung des in der Ofenabgasleitung 14 enthaltenen Drosselorganes 13 bestimmter Anteil der Ofenabgase (beispielsweise 10%) über das By-pass-System abgezogen und im Elektrofilter 9 entstaubt. Die im Filter 9 anfallenden Staubanteile werden nicht in die Anlage zurückgeführt. Der übrige Anteil der Ofenabgase wird (evtl. nach vorheriger Ausnutzung ihres Wärmeinhaltes in der nicht dargestellten Rohmehl-Mühle) im Elektrofilter 5 entstaubt. Dieser Staubanteil wird im allgemeinen in das Ofensystem zurückgeführt.

Wird andererseits ein Rohmaterial verarbeitet, dessen Schadstoffgehalt nicht so hoch ist, dass die Abzweigung eines By-pass-Stromes erforderlich ist, so wird der Schieber 15 geschlossen und das Drosselorgan 12 in der Verbindungsleitung 11 geöffnet. Ein Teil der vom Ofenabgasgebläse 3 geförderten Ofenabgase gelangt in diesem Falle über die Verbindungsleitung 11 und den Verdampfungskühler 8 zum Elektrofilter 9, wobei auch der hier anfallende Staub in das Ofensystem zurückgeführt wird. Entsprechend der Leistungsreserve des Ofenabgasgebläses 3 kann in diesem Falle die Anlage mit einer erhöhten Ofenabgasmenge und daher mit gesteigerter Leistung betrieben werden.

## Patentansprüche

1. Anlage zur Wärmebehandlung von feinkörnigem Gut, insbesondere zur Herstellung von Zement, enthaltend einen Drehrohrofen, einen Gutvorwärmer, ein in Abgasstromrichtung gesehen nach dem Vorwärmer angeordnetes Ofenabgasgebläse, einen zur Entstaubung der Ofenabgase dienenden Elektrofilter sowie ein By-pass-System mit einer zwischen Drehrohrofen und Vorwärmer angeschlossenen By-pass-Leitung sowie einem zur Entstaubung des By-pass-Stromes dienenden Anlagenteil, dadurch gekennzeichnet, dass die Druckseite des Ofenabgasgebläses (3) mit dem By-pass-System über eine mit einem Drosselorgan (12) versehene Verbindungsleitung (11) verbunden ist.

2. Anlage nach Anspruch 1, dadurch gekennzeichnet, dass das Ofenabgasgebläse (3) für eine Abgasmenge ausgelegt ist, die der über den Elektrofilter (5) geführten Ofenabgasmenge zuzüglich der Kapazität des By-pass-Systemes entspricht.

## Claims

1. A plant for heat-treating fine-grained material used especially in the manufacture of cement, comprising a rotary kiln, a pre-heater for the material, and a kiln exhaust turboblower arranged behind the pre-heater with respect to the direction of flow of the exhaust gas, an electrostatic precipitator for removing dust from the kiln exhaust gases, as well as a by-pass system with a by-pass line connected between the rotary kiln and the pre-heater as well as a part in said plant for removing the dust from the by-pass-stream, characterized by connecting the pressure side of the kiln exhaust turboblower (3) to the by-pass-system via a connecting line (11) provided with a throttling member (12).

2. The plant of Claim 1, characterized by designing the kiln exhaust turboblower (3) for an amount of exhaust gas corresponding to the amount of kiln exhaust gas passing over the electrostatic precipitator (5) plus that of the capacity of the by-pass-system.

## Revendications

1. Installation de traitement thermique de matière à granulométrie fine, en particulier de production de ciment, comprenant un four tubulaire rotatif, un réchauffeur de la matière, une soufflante de refoulement des gaz évacués du four qui est montée dans le sens d'écoulement de ces gaz en aval du réchauffeur, un électro-filtre destiné au dépoussiérage de ces gaz ainsi qu'un système en dérivation qui comporte une canalisation montée entre le four tubulaire rotatif et le réchauffeur ainsi qu'un élément destiné au dépoussiérage du flux en dérivation, installation caractérisée en ce qu'une canalisation de liaison (11) équipée d'un organe d'étranglement (12) réunit le refoulement de la soufflante (3) des gaz évacuées du four et le système en dérivation.

2. Installation selon la revendication 1, caractérisée en ce que la soufflante (3) de refoulement des gaz évacués du four est calculée pour un débit des gaz qui correspond à celui des gaz dirigés sur l'électro-filtre (5) additionné de la capacité du système en dérivation.